(19) Europäisches Patentamt
European Patent Office
Office européen des brevets

(11) **EP 3 090 802 B1**

(12) **EUROPÄISCHE PATENTSCHRIFT**

(45) Veröffentlichungstag und Bekanntmachung des Hinweises auf die Patenterteilung:
**15.08.2018 Patentblatt 2018/33**

(51) Int Cl.:
**B01L 3/00** *(2006.01)*          **B01L 3/02** *(2006.01)*
**G01N 13/02** *(2006.01)*

(21) Anmeldenummer: **15166960.3**

(22) Anmeldetag: **08.05.2015**

(54) **VERFAHREN UND VORRICHTUNG ZUR MESSUNG EINER GRENZFLÄCHENSPANNUNG**

METHOD AND DEVICE FOR MEASURING AN INTERFACIAL TENSION

PROCÉDÉ ET DISPOSITIF DESTINÉS À LA MESURE D'UNE TENSION INTERFACIALE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**09.11.2016 Patentblatt 2016/45**

(73) Patentinhaber: **KRÜSS GmbH, Wissenschaftliche Laborgeräte**
**22453 Hamburg (DE)**

(72) Erfinder:
• **Gerber, Carsten**
**22967 Tremsbüttel (DE)**
• **Schönfeld, Sven**
**24558 Wakendorf (DE)**
• **Bergmann, Tom**
**22453 Hamburg (DE)**

(74) Vertreter: **Hauck Patentanwaltspartnerschaft mbB**
**Postfach 11 31 53**
**20431 Hamburg (DE)**

(56) Entgegenhaltungen:
CN-U- 201 583 475          CN-Y- 2 738 240
US-A- 4 644 782          US-A1- 2005 065 454

• HUSMANN M ET AL: "Deformation and bursting of nonspherical polysiloxane microcapsules in a spinning-drop apparatus", JOURNAL OF COLLOID AND INTERFACE SCIENCE, ACADEMIC PRESS, NEW YORK, NY, US, Bd. 282, Nr. 1, 1. Februar 2005 (2005-02-01), Seiten 109-119, XP004660703, ISSN: 0021-9797, DOI: 10.1016/J.JCIS.2004.08.129

EP 3 090 802 B1

## Beschreibung

Die Erfindung betrifft ein Verfahren und eine Vorrichtung zur Messung einer Grenzflächenspannung zwischen einer schwereren Flüssigkeit und einer leichteren Flüssigkeit nach einem Spinning Drop-Verfahren.

Eine exakte Messung von Grenzflächenspannungen zwischen zwei Flüssigkeiten ist auf vielen technischen Anwendungsfeldern von Bedeutung, beispielsweise zur Charakterisierung von Emulsionen. Das Spinning Drop-Verfahren hat sich insbesondere bei relativ geringen Grenzflächenspannungen bewährt. Bei diesem bekannten Verfahren werden die beiden Flüssigkeiten in ein Probengefäß eingebracht und gemeinsam mit dem Probengefäß in schnelle Rotation versetzt. Dadurch bildet die Flüssigkeit mit der geringeren spezifischen Dichte (nachfolgend als leichtere Flüssigkeit bezeichnet) innerhalb des Probengefäßes einen langgestreckten, annähernd zylindrischen Tropfen, der allseitig von der Flüssigkeit mit der größeren spezifischen Dichte (nachfolgend als schwerere Flüssigkeit bezeichnet) umgeben ist. Der Durchmesser des langgestreckten Tropfens wird mit einer optischen Messeinrichtung erfasst und erlaubt eine Bestimmung der Grenzflächenspannung $\gamma$ auf Grundlage des folgenden mathematischen Zusammenhangs:

$$\gamma = \tfrac{1}{4}\, r^3\, \omega^2\, (\rho_H - \rho_L),$$

wobei r den Radius des langgestreckten Tropfens, $\omega$ die Winkelgeschwindigkeit der Rotationsbewegung, $\rho_H$ die spezifische Dichte der schwereren Flüssigkeit und $\rho_L$ die spezifische Dichte der leichteren Flüssigkeit bezeichnet. Das Verfahren eignet sich insbesondere für geringe Grenzflächenspannungen.

Voraussetzung für eine einwandfreie Messung ist eine ordnungsgemäße Präparation der beiden Flüssigkeiten in dem Probengefäß. Insbesondere sollten Durchmischungen der beiden Flüssigkeiten ebenso vermieden werden wie Lufteinschlüsse. Unerlässlich ist auch eine gleichmäßige und vibrationsfreie Rotation des Probengefäßes.

Es sind unterschiedliche Probengefäße und Verfahren zum Einbringen der beiden Flüssigkeiten in die Probengefäße bekannt geworden, die diesen Anforderungen gerecht werden. Ein bekanntes Spinning Drop-Tensiometer, das von der Anmelderin unter der Bezeichnung SITE100 angeboten wird, verwendet als Probengefäß ein nicht ohne weiteres aus dem Tensiometer entnehmbares Glasröhrchen, das an beiden Enden drehbar gelagert ist. Die beiden Enden des Glasröhrchens sind offen, sodass die schwerere Flüssigkeit über an die offenen Enden des Glasröhrchens angrenzende Hohlräume in das Glasröhrchen eingebracht werden kann. Hierzu sind Dichtungen im Bereich der Drehlager vorgesehen. Über dieselben Hohlräume kann das Glasröhrchen auch zum Reinigen gespült werden. Bei dem bekannten Tensiometer wird die leichtere Flüssigkeit mit Hilfe einer Spritze in das Glasröhrchen eingebracht. Hierzu wird mit einer Kanüle ein Septum durchstochen, das nahe einer Öffnung des Glasröhrchens in eine Wandung des Hohlraums eingesetzt ist. Ein Tropfen der leichteren Flüssigkeit wird während einer langsamen Rotation des Glasröhrchens etwa in dessen Mitte erzeugt und dann durch schnelles Zurückziehen der Kanüle von dieser gelöst. Dabei können Verwirbelungen auftreten, die zur Bildung mehrerer Tröpfchen führen und die Messung erschweren können.

Ein anderes bekanntes Tensiometer verwendet Probengefäße, die zum Einbringen der beiden Flüssigkeiten aus dem Tensiometer entnommen werden. Die Probengefäße sind in der Druckschrift CN 201583475 U beschrieben. Sie weisen ein Glasröhrchen auf, das an beiden Enden mit speziellen Stopfen verschlossen wird. Nach dem Einsetzen eines ersten Stopfens wird zunächst die schwerere Flüssigkeit eingebracht, in der Regel unter Zuhilfenahme einer Spritze mit einer Kanüle. Anschließend wird die leichtere Flüssigkeit eingebracht, in der Regel ebenfalls mit einer Spritze mit einer Kanüle. Die leichtere Flüssigkeit wird etwa in der Mitte des Glasröhrchens an einer Innenseite von dessen Wandung abgelegt. Anschließend wird das Glasröhrchen mit einem zweiten Stopfen verschlossen.

Bei beiden bekannten Verfahren gelangt der zunächst an der Innenseite einer Wandung des Glasröhrchens anhaftende Tropfen der leichteren Flüssigkeit durch die infolge der Rotationsbewegung des Glasröhrchens auftretenden Fliehkräfte nach und nach in das auf der Rotationsachse liegende Zentrum des Probengefäßes, wo sich der zu vermessende, langgestreckte Tropfen ausbildet. In vielen Fällen führt das Anhaften der leichteren Flüssigkeit an der Wandung des Glasröhrchens allerdings dazu, dass sich Teile der leichteren Flüssigkeit auf dem Weg zum Zentrum des Glasröhrchens von den noch an der Wandung anhaftenden Teilen der leichteren Flüssigkeit trennen, so dass mehrere Tröpfchen der leichteren Flüssigkeit entstehen. Solange noch Teile der Flüssigkeit an der Wandung des Glasröhrchens haften, können diese die optische Vermessung eines bereits im Zentrum rotierenden Tröpfchens beeinträchtigen. Bilden sich im Zentrum des Glasröhrchens mehrere Tröpfchen der leichteren Flüssigkeit, ist eine eindeutige Vermessung eines Tropfenradius ebenfalls nicht zuverlässig möglich. Bei starken Verwirbelungen kann die leichtere Flüssigkeit so stark zerrissen werden, dass sich eine Emulsion bildet. Insbesondere bei niedrigen Grenzflächenspannungen und/oder geringen Unterschieden der spezifischen Dichte der beiden Flüssigkeiten kann es dann sehr lange dauern, bis sich ein stabiler Zustand einstellt und eine aussagekräftige Messung möglich ist.

Aus dem US-Patent Nr. 4,644,782 sind ein Verfahren und eine Vorrichtung zur Messung einer Grenzflächenspannung zwischen einer schwereren Flüssigkeit und einer leichteren Flüssigkeit nach einem Spinning Drop-Verfahren bekannt geworden. Die bekannte Vorrichtung umfasst ein Probengefäß, das von einem Stopfen verschlossen ist. Die leichtere Flüssigkeit wird mit einer Injektionsnadel durch Durchgangsöffnungen des Stopfens hindurch in das Probengefäß eingebracht. In der Mitte des Probengefäßes verläuft eine Stange, an der entlang sich die leichtere Flüssigkeit ausbreitet. Die Durchgangsöffnungen in dem Stopfen sind seitlich von der Stange angeordnet.

Aus der Druckschrift CN 2 738 240 Y sind ein Verfahren und eine Vorrichtung zur Messung einer Grenzflächenspannung zwischen einer schwereren Flüssigkeit und einer leichteren Flüssigkeit nach einem Spinning Drop-Verfahren bekannt geworden. Das offene Ende eines transparenten Probengefäßes wird mit einer Verschlusskappe verschlossen, die auf das Probengefäß aufgeschoben wird. Die Verschlusskappe weist eine Durchgangsbohrung und eine elastische Membran auf, durch die hindurch eine leichtere Flüssigkeit mit einer Injektionsnadel eingebracht werden kann.

Aus dem Facharktikel Husmann M et al.: "Deformation and bursting of nonspherical polysiloxane microcapsules in a spinning-drop apparatus", Journal of Colloid and Interface Science, Academic Press, New York, NY, US, Bd. 282, Nr. 1, 1. Februar 2005, Seiten 109-119 sind ein Verfahren und eine Vorrichtung zur Messung einer Grenzflächenspannung zwischen einer schwereren Flüssigkeit und einer leichteren Flüssigkeit nach einem Spinning Drop-Verfahren bekannt geworden. Das Probengefäß umfasst ein transparentes Röhrchen und ist an beiden Enden mit jeweils einer Kappe mit einem Septum verschlossen, durch das eine Injektionsnadel hindurchgestochen werden kann.

Davon ausgehend ist es die Aufgabe der Erfindung, ein Verfahren zur Messung einer Grenzflächenspannung sowie ein Probengefäß zur Verfügung zu stellen, mit denen die Präparation der Proben vereinfacht wird.

Aus der Druckschrift US 2005/0065454 A1 ist ein Probengefäß für Blutentnahmen bekannt geworden. Es weist ein dünnwandiges Röhrchen auf, das von zwei Stopfen verschlossen ist.

Diese Aufgabe wird gelöst durch das Verfahren mit den Merkmalen des Anspruchs 1. Vorteilhafte Ausgestaltungen sind in den sich anschließenden Unteransprüchen angegeben.

Das Verfahren dient zur Messung einer Grenzflächenspannung zwischen einer schwereren Flüssigkeit und einer leichteren Flüssigkeit und weist die folgenden Schritte auf:

- Bereitstellen eines transparenten Probengefäßes, das einen Innenraum und eine Öffnung aufweist,

- Bereitstellen eines Stopfens, mit dem die Öffnung verschließbar ist und der eine Aufnahme für die leichtere Flüssigkeit aufweist,

- Einbringen der schwereren Flüssigkeit in das transparente Probengefäß,

- Einbringen der leichteren Flüssigkeit in die Aufnahme des Stopfens,

- Verschließen der Öffnung des transparenten Probengefäßes mit dem Stopfen, so dass die Aufnahme des Stopfens dem Innenraum des transparenten Probengefäßes zugewandt ist,

- Präparieren eines langgestreckten Tropfens der leichteren Flüssigkeit durch Versetzen des transparenten Probengefäßes in eine Rotationsbewegung um seine Längsachse mit einer ersten Drehzahl und anschließendes Verringern der Drehzahl der Rotationsbewegung von der ersten Drehzahl auf eine zweite Drehzahl, und

- Messen einer geometrischen Eigenschaft des langgestreckten Tropfens der leichteren Flüssigkeit, der allseitig von der schwereren Flüssigkeit umgeben ist.

Die Schritte können, müssen jedoch nicht in der angegebenen Reihenfolge ausgeführt werden.

Das Probengefäß dient zur Aufnahme der beiden Flüssigkeiten und ist transparent, um eine optische Beobachtung und Vermessung des rotierenden Tropfens zu ermöglichen. Hierzu kann es beispielsweise aus einem transparenten Kunststoffmaterial und/oder aus Glas gefertigt sein. Das Probengefäß kann ein Röhrchen aufweisen, das an einem Ende oder an beiden Enden eine Öffnung aufweist. Das Röhrchen kann über seine gesamte Länge einen konstanten Innen- und/oder Außendurchmesser aufweisen.

Der Stopfen kann zum Beispiel aus Kunststoff bestehen, insbesondere aus PTFE. Bei dem erfindungsgemäßen Verfahren erfüllt der Stopfen zwei Funktionen. Einerseits wird die Öffnung des Probengefäßes mit ihm flüssigkeitsdicht verschlossen, sodass bei der für die Messung erforderlichen Rotation des Probengefäßes auch bei hohen Drehzahlen keine Flüssigkeit austreten kann. Andererseits weist der Stopfen eine Aufnahme für die leichtere Flüssigkeit auf. Diese wird also nicht wie bei bekannten Verfahren an der Innenseite einer Wandung des Probengefäßes abgelegt, sondern in der Aufnahme des Stopfens eingebracht. Hierzu kann zum Beispiel eine Spritze mit einer Kanüle verwendet werden.

Beim Verschließen des Probengefäßes mit dem Stopfen, in der Regel nachdem die schwerere Flüssigkeit bereits in das Probengefäß eingebracht wurde, befinden sich somit die schwerere Flüssigkeit und die leichtere Flüssigkeit innerhalb des Probengefäßes, wobei die leichtere Flüssigkeit zunächst in der Aufnahme des Stopfens angeordnet ist.

Das Probengefäß und der Stopfen können rotationssymmetrisch sein und jeweils eine Längsachse aufweisen, die bei dem mit dem Stopfen verschlossenen Probengefäß zusammenfallen. Die Aufnahme in dem Stopfen für die leichtere Flüssigkeit kann ebenfalls rotationssymmetrisch zu der Längsachse des Stopfens ausgebildet sein und sich insbesondere auf dieser Achse befinden. Bezogen auf die Radialrichtung des Probengefäßes befindet sich die leichtere Flüssigkeit dann, wenn sie in der Aufnahme des Stopfens und der Stopfen in dem Probengefäß angeordnet ist, bereits an der für die Vermessung des Tropfens der leichteren Flüssigkeit vorgesehenen Position.

Die Aufnahme des Stopfens ist außerdem so in dem Stopfen angeordnet, dass sie dem Innenraum des transparenten Probengefäßes zugewandt ist, wenn das transparente Probengefäß in der vorgesehenen Weise mit dem Stopfen verschlossen ist. Darum kann die leichtere Flüssigkeit aus der Aufnahme des Stopfens weiter in den Innenraum des Probengefäßes gelangen, insbesondere bis in einen bezogen auf die Längsachse des Probengefäßes mittleren Abschnitt, in dem der längliche Tropfen am besten vermessen werden kann.

Zur Ausbildung des länglichen Tropfens an dieser Position innerhalb des Probengefäßes wird das Probengefäß nach dem Einbringen der beiden Flüssigkeiten und dem Verschließen der Öffnung des transparenten Probengefäßes mit dem Stopfen zunächst in eine Rotationsbewegung um seine Längsachse mit einer ersten Drehzahl versetzt. Anschließend wird die Drehzahl der Rotationsbewegung von der ersten Drehzahl auf eine zweite Drehzahl verringert. Die zweite Drehzahl ist kleiner als die erste Drehzahl. Versuche haben ergeben, dass durch diese Drehzahlsteuerung die leichtere Flüssigkeit aus der Aufnahme des Stopfens, die sich an dem mit dem Stopfen verschlossenen Ende des Probengefäßes befindet, herausbefördert und von Aufnahme und Stopfen in Richtung zur Mitte des Probengefäßes hin transportiert wird. Dadurch gelingt das Präparieren des länglichen Tropfens besonders einfach und zuverlässig.

Gegenüber den eingangs geschilderten, bekannten Verfahren, bei denen die leichtere Flüssigkeit an einer Wandung des Probengefäßes abgelegt und von dort erst zu dessen Mitte gelangen muss, befindet sich die leichtere Flüssigkeit bei der Erfindung bereits vor Beginn der Rotationsbewegung im Bereich der Längsachse des Probengefäßes. Dadurch wird ein "Zerreißen" der leichteren Flüssigkeit beim Versetzen des Probengefäßes in die Rotationsbewegung von vornherein vermieden. Auch ein Anhaften der leichteren Flüssigkeit an der Wandung tritt nicht auf. Die Präparation des langgestreckten Tropfens ist dadurch in besonders kurzer Zeit möglich, weil in der Regel keine Entmischung der beiden Flüssigkeiten abgewartet werden muss. Zudem kann eine Beeinträchtigung der optischen Beobachtung und Vermessung des langgestreckten Tropfens durch an der Wandung anhaftende Teile der leichteren Flüssigkeit ausgeschlossen werden.

Nach der Präparation des langgestreckten Tropfens in der genannten Weise wird eine geometrische Eigenschaft des langgestreckten Tropfens der leichteren Flüssigkeit gemessen, wobei der Tropfen allseitig von der schwereren Flüssigkeit umgeben ist. Die geometrische Eigenschaft kann insbesondere ein Durchmesser oder Radius des langgestreckten Tropfens sein, sodass die eingangs genannte Formel zur Bestimmung der Grenzflächenspannung unmittelbar angewendet werden kann. Die geometrischen Eigenschaften des Tropfens können jedoch auch über andere Messwerte charakterisiert werden, beispielsweise über eine Kontur der Grenzfläche.

Welche hydrodynamischen Effekte im Einzelnen den geschilderten Transport der leichteren Flüssigkeit aus der Aufnahme des Stopfens in Richtung zur Mitte des Probengefäßes hin im Einzelnen bewirken, konnte noch nicht vollständig aufgeklärt werden. Es wird vermutet, dass bei der Beschleunigung der Rotation auf die erste Drehzahl und beim Verringern der Drehzahl von der ersten Drehzahl auf die zweite Drehzahl parallel zur Längsachse des Probengefäßes ausgerichtete Strömungen auftreten, die ihre Ursache darin haben, dass die Flüssigkeiten zunächst dort in Bewegung versetzt werden, wo sie im Kontakt mit den Wandungen des Probengefäßes bzw. des Stopfens stehen, bis sich schließlich ein stationärer Zustand ausbildet. Diese Strömungen bewirken vermutlich den Transport der leichteren Flüssigkeit.

In einer Ausgestaltung ist die erste Drehzahl im Bereich von 500 bis 20.000 Umdrehungen pro Minute größer als die zweite Drehzahl. Versuche haben ergeben, dass ein Verringern der Drehzahl um dieses Maß den gewünschten Transport der Flüssigkeit bewirkt. Insbesondere kann die erste Drehzahl im Bereich von 1.000 bis 5.000 Umdrehungen pro Minute größer sein als die zweite Drehzahl, bevorzugt um ungefähr 3.000 Umdrehungen pro Minute.

In einer Ausgestaltung erfolgt das Verringern der Drehzahl von der ersten Drehzahl auf die zweite Drehzahl innerhalb eines Zeitraums von 10 Sekunden oder weniger. Erfolgt das Verringern der Drehzahl über einen wesentlich längeren Zeitraum, wird der gewünschte Transporteffekt der leichteren Flüssigkeit in unzureichendem Maße erreicht. Bei einem Verringern der Drehzahl innerhalb des genannten, relativ kurzen Zeitraums, der gegebenenfalls auf 8 Sekunden oder weniger, 5 Sekunden oder weniger, 3 Sekunden oder weniger oder auf sogar nur eine Sekunde oder weniger reduziert werden kann, wird der gewünschte Effekt jedoch zuverlässig erreicht.

In einer Ausgestaltung wölbt sich eine Oberfläche der schwereren Flüssigkeit vor dem Verschließen der Öffnung aus der Öffnung hervor. Dies wirkt unerwünschten Lufteinschlüssen im Bereich des Stopfens nach dem Verschließen der Öffnung entgegen.

Die oben genannte Aufgabe wird ebenfalls gelöst durch die Vorrichtung mit den Merkmalen des Anspruchs 5. Vorteilhafte Ausgestaltungen sind in den sich anschließenden Unteransprüchen angegeben.

Die erfindungsgemäße Vorrichtung kann insbesondere für das bereits beschriebene Verfahren verwendet werden. Zur Erläuterung der Merkmale und Vorteile der Vorrichtung wird auf die vorstehenden Erläuterungen des Verfahrens verwiesen, die entsprechend gelten.

In einer Ausgestaltung weist die Aufnahme eine Vertiefung auf, die an einer Stirnseite des Stopfens angeordnet ist. Die Stirnseite des Stopfens ist diejenige Seite, mit der der Stopfen in die Öffnung des Probengefäßes eingesetzt wird. Die Vertiefung kann rotationssymmetrisch um die Längsachse des Stopfens ausgebildet sein, wobei der Durchmesser der Vertiefung über die Längsrichtung des Stopfens grundsätzlich einen beliebigen Verlauf nehmen kann. Möglich ist sowohl ein mit zunehmendem Abstand von der Stirnseite des Stopfens sich verjüngender als auch ein sich aufweitender Durchmesser der Vertiefung.

In einer Ausgestaltung weist die Aufnahme ein Reservoir und eine mit dem Reservoir verbundene Öffnung auf, die an einer Stirnseite des Stopfens angeordnet ist. In diesem Fall kann die leichtere Flüssigkeit im Wesentlichen von dem Reservoir aufgenommen werden, wobei über die Öffnung gleichermaßen die leichtere Flüssigkeit in das Reservoir eingebracht und aus dem Reservoir in der erläuterten Weise durch die Öffnung in die Mitte des Probengefäßes transportiert werden kann.

Bei der Erfindung ist die Aufnahme eine Sackbohrung. Die Sackbohrung kann über ihre gesamte Tiefe einen gleichmäßigen Innendurchmesser aufweisen. Eine Sackbohrung stellt somit eine geometrisch besonders einfache und gut zu reinigende Aufnahme dar.

Bei der Erfindung weist die Aufnahme ein Volumen im Bereich von 0,5 µl bis 100 µl auf. In diesem Fall nimmt die Aufnahme gerade etwa so viel der leichteren Flüssigkeit auf, wie zur Ausbildung des langgestreckten Tropfens in der gewünschten Größe benötigt wird, und kann stets vollständig gefüllt werden. Dadurch wird vermieden, dass bei einer nur teilweise gefüllten Aufnahme Luft in das Innere des Probengefäßes gelangt.

In einer Ausgestaltung weist der Stopfen einen ersten Längsabschnitt auf, in dem ein Außendurchmesser des Stopfens von einem ersten Wert, der einem Innendurchmesser der Öffnung des Probengefäßes entspricht, auf einen zweiten Wert, der geringer ist als der Innendurchmesser der Öffnung des Probengefäßes, abnimmt. Der erste Längsabschnitt kann sich über eine Länge erstrecken, die im Bereich zwischen 25 % und 200 % des Innendurchmessers des Probengefäßes im Bereich der mit dem Stopfen zu verschließenden Öffnung liegt, insbesondere im Bereich von 50 % bis 100 % dieses Innendurchmessers. Ein solcher erster Längsabschnitt erleichtert nicht nur das Einsetzen des Stopfens in das Probengefäß, sondern wirkt zugleich unerwünschten Lufteinschlüssen entgegen, die sich beim Verschließen des Probengefäßes bilden können.

In einer Ausgestaltung ist der erste Längsabschnitt konisch. Dies ist für die genannten Effekte besonders förderlich.

In einer Ausgestaltung weist der Stopfen einen zweiten, zylindrischen Längsabschnitt auf, in dem ein Außendurchmesser des Stopfens so bemessen ist, dass er dichtend in die Öffnung des Probengefäßes einsetzbar ist. Der Stopfen dichtet also im Bereich einer Ringfläche ab, nicht nur an einer Kante der Öffnung des Probengefäßes.

In einer Ausgestaltung weist der Stopfen einen stufenförmigen Anschlag auf, der an einem Rand der Öffnung des Probengefäßes anliegt, wenn der Stopfen vollständig in die Öffnung eingesetzt ist. Ein solcher Anschlag zeigt dem Benutzer an, dass der Stopfen korrekt eingesetzt ist und wirkt dadurch einer übermäßigen Kraftanwendung entgegen.

In einer Ausgestaltung weist die Vorrichtung eine Halterung, in die das mit dem Stopfen verschlossene Probengefäß einsetzbar ist, einen Drehantrieb, mit dem die Halterung in eine Rotationsbewegung versetzbar ist, und eine Steuerung auf, mit der eine Drehzahl der Rotationsbewegung steuerbar ist. Die Vorrichtung umfasst also weitere Bestandteile, die für die Ausführung des erfindungsgemäßen Verfahrens hilfreich sind.

In einer Ausgestaltung ist die Steuerung dazu ausgebildet, die Drehzahl automatisch in einem vorgegebenen Zeitraum von einer ersten Drehzahl auf eine vorgegebene zweite Drehzahl und/oder automatisch in einem vorgegebenen Zeitraum von einer ersten Drehzahl um eine vorgegebene Drehzahl zu verringern. Mit Hilfe dieser Steuerung kann das erfindungsgemäße Verfahren weitgehend automatisiert ausgeführt werden. Um den langgestreckten Tropfen der leichteren Flüssigkeit zu präparieren, braucht der Benutzer im Wesentlichen nur noch die schwerere Flüssigkeit in das Probengefäß und die leichtere Flüssigkeit in die Aufnahme des Stopfens einzubringen und das Probengefäß ordnungsgemäß mit dem Stopfen zu verschließen und in die Halterung einzusetzen.

Die Erfindung wird nachfolgend anhand eines in Figuren dargestellten Ausführungsbeispiels näher erläutert. Es zeigen:

Figur 1     ein erfindungsgemäßes Probengefäß,

Figur 2     das Probengefäß aus Figur 1 nach dem Aufnehmen der schwereren Flüssigkeit,

Figur 3     einen Stopfen für das Probengefäß aus den Figuren 1 und 2

Figur 4     den Stopfen aus Figur 3 nach dem Einbringen der leichteren Flüssigkeit,

Figur 5     das Probengefäß aus den Figuren 1 und 2 nach dem Einsetzen des mit der leichteren Flüssigkeit befüllten Stopfens aus Figur 4,

Figur 6     die Anordnung aus Figur 5 nach dem Versetzen des Probengefäßes in eine Rotationsbewegung mit einer ersten Drehzahl,

Figur 7    die Anordnung aus Figur 6 nach dem Verringern der Drehzahl,

Figur 8    eine schematische Darstellung zur Anordnung des Probengefäßes in einer Halterung.

Alle Figuren sind schematische Schnittdarstellungen.

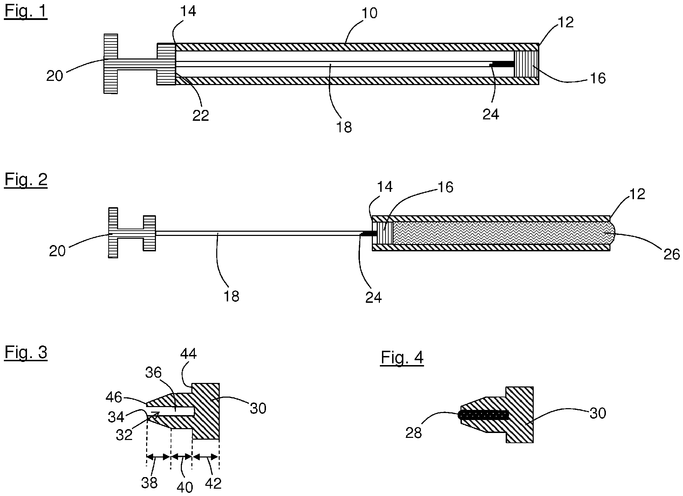

Figur 1 zeigt ein transparentes Röhrchen 10 eines erfindungsgemäßen Probengefäßes. Das Röhrchen 10 weist einen über seine gesamte Länge gleichmäßigen Innendurchmesser auf. Es besteht aus Glas mit einer relativ großen Wandstärke und ist präzisionsgefertigt, sodass es für eine Rotation mit hohen Drehzahlen von über 200 Umdrehungen pro Minute geeignet ist. Das Röhrchen 10 weist ein vorderes Ende 12 und ein hinteres Ende 14 auf und ist an diesen beiden Enden offen.

Das Probengefäß besteht im Wesentlichen aus dem Röhrchen 10 und einem Kolben 16, der verschieblich in dem Röhrchen 10 angeordnet ist. Der Kolben 16 weist einen Außendurchmesser auf, der dem Innendurchmesser des Röhrchens 10 entspricht, sodass er dichtend darin verlagert werden kann. Die Länge des Kolbens 16 entspricht etwa dem Innendurchmesser des Röhrchens 10.

Der Kolben 16 ist mit einer Kolbenstange 18 verbunden, die an ihrem hinteren Ende einen Griffabschnitt 20 aufweist. Der Griffabschnitt 20 weist eine vordere Stirnfläche 22 auf, die in der gezeigten Stellung des Kolbens 16, in der dieser bündig mit dem vorderen Ende 12 des Röhrchens 10 abschließt, an dem hinteren Ende 14 des Röhrchens 10 anliegt. Der dadurch gebildete Anschlag verhindert, dass der Kolben weiter vorgeschoben wird, als in der Figur gezeigt. Zwischen Kolben 16 und Kolbenstange 18 besteht eine lösbare Verbindung 24, die in der Figur nur schematisch angedeutet ist.

Zum Einbringen der schwereren Flüssigkeit in das Röhrchen 10 kann die in der Figur 1 gezeigte Anordnung mit dem vorderen Ende 12 des Röhrchens 10 in die aufzunehmende Flüssigkeit eingetaucht und anschließend kann die Kolbenstange 18 zurückgezogen werden. Dadurch ergibt sich die in der Figur 2 gezeigte Anordnung, bei der der gesamte Innenraum des Röhrchens 10 zwischen Kolben 16 und vorderem Ende 12 vollständig mit der schwereren Flüssigkeit 26 gefüllt ist. Zusätzlich wurde, nach dem Entnehmen der Anordnung aus der Flüssigkeit, der Kolben 16 wieder geringfügig nach vorn vorgeschoben, sodass sich die schwerere Flüssigkeit 26 am vorderen Ende 12 aus der Öffnung des Röhrchens 10 hervorwölbt.

Das in den Figuren 1 und 2 gezeigte Probengefäß mit einem verschieblichen Kolben 16 ermöglicht somit ein besonders einfaches Befüllen des Probengefäßes mit der schwereren Flüssigkeit 26. Für die Erfindung ist dieser Mechanismus jedoch nicht erforderlich. Es kann ebenso gut ein abweichend ausgebildetes Probengefäß verwendet werden, beispielsweise mit einem fest verschlossenen zweiten Ende 14. In diesem Fall kann das Probengefäß dann auf andere Weise gefüllt werden, beispielsweise mit Hilfe einer Spritze und einer Kanüle, mit der die schwerere Flüssigkeit 26 aufgenommen und in das Probengefäß eingegeben wird.

Figur 3 zeigt einen Stopfen 30, der rotationssymmetrisch ausgebildet ist und eine Aufnahme 32 für die leichtere Flüssigkeit 28 aufweist. Die Aufnahme 32 ist von einer Sackbohrung gebildet, die entlang der Längsachse des Stopfens 30 angeordnet ist. Die Aufnahme 32 weist eine Öffnung 34 und ein Reservoir 36 auf. Die Öffnung 34 ist in einer Stirnseite 46 des Stopfens 30 ausgebildet, die beim Verschließen in die Öffnung des Probengefäßes eingesetzt wird. Das Reservoir 36 kann durch die Öffnung 34 mit der leichteren Flüssigkeit 28 gefüllt werden, beispielsweise unter Verwendung einer Spritze mit einer Kanüle.

Der Stopfen 30 weist einen konischen, ersten Längsabschnitt 38, einen zylindrischen, zweiten Längsabschnitt 40 und einen ebenfalls zylindrischen, dritten Längsabschnitt 42 auf. Der Außendurchmesser des zweiten Längsabschnitts 40 entspricht dem Innendurchmesser des Röhrchens 10 bzw. dem Innendurchmesser der Öffnung des mit dem Stopfen 30 zu verschließenden Probengefäßes. Die zylindermantelförmige Außenfläche des zweiten Längsabschnitts 40 kann daher dichtend in die Öffnung des Probengefäßes eingesetzt werden.

Im ersten Längsabschnitt 38 verjüngt sich der Außendurchmesser des Stopfens 30 von dem Durchmesser des zweiten Längsabschnitts 40 bis zu einem geringeren Durchmesser, den die Stirnseite 46 am von dem dritten Längsabschnitt 42 entfernten Ende des ersten Längsabschnitts 38 aufweist. Die Länge des ersten Längsabschnitts 38 liegt im Bereich von 25 % bis 200 % des Innendurchmessers der Öffnung des zu verschließenden Probengefäßes bzw. des Außendurchmessers des zweiten Längsabschnitts 40. Der dritte Längsabschnitt 42 weist einen größeren Durchmesser auf als der zweite Längsabschnitt 40, wobei zwischen dem zweiten Längsabschnitt 40 und den dritten Längsabschnitt 42 ein stufenförmiger Anschlag 44 ausgebildet ist.

Figur 4 zeigt den Stopfen 30 aus Figur 3, nachdem die Aufnahme 32 mit einer leichteren Flüssigkeit 28 gefüllt wurde. In diesem Zustand kann der Stopfen 30 in die Öffnung des Probengefäßes, das bereits mit der schwereren Flüssigkeit 26 gefüllt ist, insbesondere wie in Figur 2 gezeigt, eingesetzt werden, wodurch zugleich die leichtere Flüssigkeit 28 in das Probengefäß gelangt.

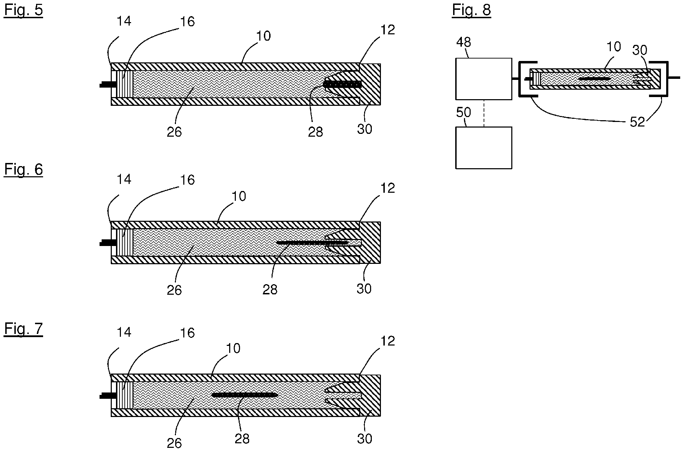

Es ergibt sich dann die in der Figur 5 gezeigte Anordnung. Die Kolbenstange 18 wurde im Bereich der lösbaren Verbindung 24 von dem Kolben 16 getrennt und entfernt. Der Stopfen 30 ist dichtend in die Öffnung des Probengefäßes, d. h. in die Öffnung am ersten Ende 12 des Röhrchens 10, eingesetzt.

Die Anordnung aus der Figur 5 wird zur weiteren Präparation des langgestreckten Tropfens dann bis zu einer ersten Drehzahl in eine Rotationsbewegung versetzt, wodurch sich die in der Figur 6 gezeigte Anordnung ergibt. Man erkennt, dass die leichtere Flüssigkeit 28 eine langgestreckte Form eingenommen hat und sich bereits zum Teil aus der Aufnahme 32 in das Innere des Probengefäßes hineinbewegt hat. Sie befindet sich jedoch noch nicht in einem ausreichenden Abstand von dem Stopfen 30.

Nachdem die Drehzahl von der ersten Drehzahl bis zu einer zweiten Drehzahl verringert wurde, ergibt sich die in der Figur 7 gezeigte Anordnung, in der die leichtere Flüssigkeit 28 den für die optische Messung erwünschten, langestreckten Tropfen innerhalb des Probengefäßes und etwa in dessen Mitte ausgebildet hat. Um den Tropfen in diese Position zu bringen, kann wahlweise eine Neigungseinrichtung verwendet werden, mit der das rotierende Probengefäß relativ zu Horizontalen geneigt werden kann. Ebenfalls unschädlich für die Messung ist, wenn ein Teil der leichteren Flüssigkeit am Stopfen zurückbleibt. Diese Details sind in den schematischen Figuren nicht dargestellt.

Während der Rotationsbewegung des Probengefäßes kann dann eine geometrische Eigenschaft des langgestreckten Tropfens, beispielsweise sein Durchmesser, vermessen und einer Berechnung der Grenzflächenspannung zugrunde gelegt werden. Es versteht sich, dass die Rotationsgeschwindigkeit für diese Messung nochmals variiert werden kann.

Figur 8 zeigt schematisch die vorgesehene Anordnung des Röhrchens 10 mit dem eingesetzten Stopfen 30 in einer Halterung 52. Mit dem von der Steuerung 50 gesteuerten Drehantrieb 48 kann das Röhrchen 10 in eine Rotation um seine Längsachse versetzt werden.

Liste der verwendeten Bezugszeichen:

10   Röhrchen
12   vorderes Ende
14   hinteres Ende
16   Kolben
18   Kolbenstange
20   Griffabschnitt
22   Stirnfläche
24   lösbare Verbindung
26   schwerere Flüssigkeit
28   leichtere Flüssigkeit
30   Stopfen
32   Aufnahme
34   Öffnung
36   Reservoir
38   erster Längsabschnitt
40   zweiter Längsabschnitt
42   dritter Längsabschnitt
44   Anschlag
46   Stirnseite
48   Drehantrieb
50   Steuerung

52   Halterung

**Patentansprüche**

1.   Verfahren zur Messung einer Grenzflächenspannung zwischen einer schwereren Flüssigkeit (28) und einer leichteren Flüssigkeit (26) mit den folgenden Schritten:

• Bereitstellen eines transparenten Probengefäßes, das einen Innenraum und eine Öffnung aufweist,
• Bereitstellen eines Stopfens (30), mit dem die Öffnung verschließbar ist und der eine Aufnahme (32) für die leichtere Flüssigkeit (28) aufweist,
• Einbringen der schwereren Flüssigkeit (26) in das transparente Probengefäß,
• Einbringen der leichteren Flüssigkeit (28) in die Aufnahme (32) des Stopfens (30),
• Verschließen der Öffnung des transparenten Probengefäßes mit dem Stopfen (30), so dass die Aufnahme (32) des Stopfens (30) dem Innenraum des transparenten Probengefäßes zugewandt ist,
Präparieren eines langgestreckten Tropfens der leichteren Flüssigkeit (28) durch Versetzen des transparenten Probengefäßes in eine Rotationsbewegung um seine Längsachse mit einer ersten Drehzahl und anschließendes Verringern der Drehzahl der Rotationsbewegung von der ersten Drehzahl auf eine zweite Drehzahl, und
• Messen einer geometrischen Eigenschaft des langgestreckten Tropfens der leichteren Flüssigkeit (28), der allseitig von der schwereren Flüssigkeit (26) umgeben ist.

2.   Verfahren nach Anspruch 1, **dadurch gekennzeichnet, dass** die erste Drehzahl im Bereich von 500 bis 20.000 Umdrehungen pro Minute größer ist als die zweite Drehzahl.

3.   Verfahren nach Anspruch 1 oder 2, **dadurch gekennzeichnet, dass** das Verringern der Drehzahl von der ersten Drehzahl auf die zweite Drehzahl innerhalb eines Zeitraums von 10 s oder weniger erfolgt.

4.   Verfahren nach einem der Ansprüche 1 bis 3, **dadurch gekennzeichnet, dass** sich eine Oberfläche der schwereren Flüssigkeit (26) vor dem Verschließen der Öffnung aus der Öffnung hervorwölbt.

5.   Vorrichtung zur Messung einer Grenzflächenspannung zwischen einer schwereren Flüssigkeit (26) und einer leichteren Flüssigkeit (28) nach einem Spinning Drop-Verfahren mit

- einem transparenten Probengefäß, das einen Innenraum und eine Öffnung aufweist, und
- einem Stopfen (30), mit dem die Öffnung verschließbar ist,
- wobei der Stopfen (30) eine Aufnahme (32) für die leichtere Flüssigkeit (28) aufweist, die dem Innenraum des Probengefäßes zugewandt ist, wenn die Öffnung mit dem Stopfen (30) verschlossen ist, wobei die Aufnahme (32) rotationssymmetrisch und auf einer Längsachse des Stopfens (30) angeordnet ist, **dadurch gekennzeichnet, dass**
- die Aufnahme (32) eine Sackbohrung ist und ein Volumen im Bereich von 0,5 µl bis 100 µl aufweist.

6. Vorrichtung nach Anspruch 5, **dadurch gekennzeichnet, dass** die Aufnahme (32) eine Vertiefung aufweist, die an einer Stirnseite (46) des Stopfens (30) angeordnet ist.

7. Vorrichtung nach Anspruch 5 oder 6, **dadurch gekennzeichnet, dass** die Aufnahme (32) ein Reservoir (36) und eine mit dem Reservoir (36) verbundene Öffnung (34) aufweist, die an einer Stirnseite (46) des Stopfens (30) angeordnet ist.

8. Vorrichtung nach einem der Ansprüche 5 bis 7, **dadurch gekennzeichnet, dass** der Stopfen (30) einen ersten Längsabschnitt (38) aufweist, in dem ein Außendurchmesser des Stopfens (30) von einem ersten Wert, der einem Innendurchmesser der Öffnung des Probengefäßes entspricht, auf einen zweiten Wert, der geringer ist als der Innendurchmesser der Öffnung des Probengefäßes, abnimmt.

9. Vorrichtung nach Anspruch 8, **dadurch gekennzeichnet, dass** der erste Längsabschnitt (38) konisch ist.

10. Vorrichtung nach einem der Ansprüche 5 bis 9, **dadurch gekennzeichnet, dass** der Stopfen (30) einen zweiten, zylindrischen Längsabschnitt (40) aufweist, in dem ein Außendurchmesser des Stopfens (30) so bemessen ist, dass er dichtend in die Öffnung des Probengefäßes einsetzbar ist.

11. Vorrichtung nach einem der Ansprüche 5 bis 10, **dadurch gekennzeichnet, dass** der Stopfen (30) einen stufenförmigen Anschlag (44) aufweist, der an einem Rand der Öffnung des Probengefäßes anliegt, wenn der Stopfen (30) vollständig in die Öffnung eingesetzt ist.

12. Vorrichtung nach einem der Ansprüche 5 bis 11, **gekennzeichnet durch** eine Halterung (52), in die das mit dem Stopfen (30) verschlossene Probengefäß einsetzbar ist, einen Drehantrieb (48), mit dem die Halterung (52) in eine Rotationsbewegung versetzbar ist, und eine Steuerung (50), mit der eine Drehzahl der Rotationsbewegung steuerbar ist.

13. Vorrichtung nach Anspruch 12, **dadurch gekennzeichnet, dass** die Steuerung (50) dazu ausgebildet ist, die Drehzahl automatisch in einem vorgegebenen Zeitraum von einer ersten Drehzahl auf eine vorgegebene zweite Drehzahl und/oder automatisch in einem vorgegebenen Zeitraum von einer ersten Drehzahl um eine vorgegebene Drehzahl zu verringern.

**Claims**

1. A method for measuring an interfacial tension between a heavier liquid (28) and a lighter liquid (26) with the following steps:

- providing a transparent sample container that has an interior space and an opening,
- providing a plug (30) with which the opening can be closed and that has a receiver (32) for the lighter liquid (28),
- introducing the heavier liquid (26) into the transparent sample container,
- introducing the lighter liquid (28) into the receiver (32) of the plug (30),
- closing the opening of the transparent sample container with the plug (30) so that that receiver (32) of the plug (30) faces the interior space of the transparent sample container,
- preparing an elongated drop of the lighter liquid (28) by setting the transparent sample container in a rotating motion about its longitudinal axis with a first rotational speed and subsequently reducing the rotational speed of the rotating motion from the first rotational speed to a second rotational speed, and
- measuring a geometric characteristic of the elongated drop of the lighter liquid (28) that is surrounded on all sides by the heavier liquid (26).

2. The method according to claim 1, **characterized in that** the first rotational speed is greater than the second rotational speed in the range of 500 to 20,000 rotations per minute.

3. The method according to claim 1 or 2, **characterized in that** the reduction of the rotational speed from the first rotational speed to the second rotational speed occurs within a period of time of 10 s or less.

4. The method according to one of claims 1 to 3, **char-**

**acterized in that** a surface of the heavier liquid (26) bulges out of the opening before the opening is closed.

5. A device for measuring an interfacial tension between a heavier liquid (26) and a lighter liquid (28) according to a spinning drop method with

> • a transparent sample container that has an interior space and an opening, and
> • a plug (30) with which the opening can be closed,
> • wherein the plug (30) has a receiver (32) for the lighter liquid (28) that faces the interior space of the sample container when the opening is closed with the plug (30), wherein the receiver (32) is arranged rotationally symmetrically and on a longitudinal axis of the plug (30), **characterized in that**
> • the receiver (32) is a blind hole and has a volume in the range of 0.5 $\mu$l to 100 $\mu$l.

6. The device according to claim 5, **characterized in that** the receiver (32) has a depression that is arranged on a front face (46) of the plug (30).

7. The device according to claim 5 or 6, **characterized in that** the receiver (32) has a reservoir (36) and an opening (34) that is connected to the reservoir (36) and is arranged on a front face (46) of the plug (30).

8. The device according to one of claims 5 to 7, **characterized in that** the plug (30) has a first longitudinal section (38) in which an outer diameter of the plug (30) decreases from a first value that corresponds to an inner diameter of the opening of the sample container to a second value that is smaller than the inner diameter of the opening of the sample container.

9. The device according to claim 8, **characterized in that** the first longitudinal section (38) is conical.

10. The device according to one of claims 5 to 9, **characterized in that** the plug (30) has a second, cylindrical longitudinal section (40) in which an outer diameter of the plug (30) is dimensioned so that it can be inserted in a sealing manner into the opening of the sample container.

11. The device according to one of claims 5 to 10, **characterized in that** the plug (30) has a step-shaped stop (44) that abuts an edge of the opening of the sample container when the plug (30) is fully inserted into the opening.

12. The device according to one of claims 5 to 11, **characterized by** a holder (52) into which the sample container closed with the plug (30) can be inserted, a rotary drive (48) with which the holder (52) can be set in a rotating motion, and a control (50) with which a rotational speed of the rotating motion can be controlled.

13. The device according to claim 12, **characterized in that** the control (50) is designed to reduce the rotational speed automatically within a specified period of time from a first rotational speed to a specified second rotational speed and/or automatically within a specified period of time from a first rotational speed by a specified rotational speed.

**Revendications**

1. Procédé pour la mesure d'une tension interfaciale entre un liquide plus lourd (28) et un liquide plus léger (26), comprenant les étapes suivantes :

> • mise à disposition d'un récipient à échantillon transparent présentant un espace intérieur et une ouverture,
> • mise à disposition d'un bouchon (30) permettant de fermer l'ouverture et présentant une admission (32) pour le liquide plus léger (28),
> • introduction du liquide plus lourd (26) dans le récipient à échantillon transparent,
> • introduction du liquide plus léger (28) dans l'admission (32) du bouchon (30),
> • fermeture de l'ouverture du récipient à échantillon transparent avec le bouchon (30), de manière à ce que l'admission (32) du bouchon (30) soit tournée vers l'espace intérieur du récipient à échantillon transparent,
> • préparation d'une goutte allongée du liquide plus léger (28) par mise en mouvement de rotation du récipient à échantillon transparent autour de son axe longitudinal à une première vitesse de rotation, puis réduction de la vitesse de rotation du mouvement de rotation de la première vitesse de rotation à une deuxième vitesse de rotation, et
> • mesure d'une propriété géométrique de la goutte allongée du liquide plus léger (28), laquelle est entourée de toutes parts par le liquide plus lourd (26).

2. Procédé selon la revendication 1, **caractérisé en ce que** la première vitesse de rotation est plus grande de 500 à 20.000 tours par minute que la deuxième vitesse de rotation.

3. Procédé selon la revendication 1 ou 2, **caractérisé en ce que** la réduction de la vitesse de rotation de la première vitesse de rotation à la deuxième vitesse de rotation est effectuée dans un laps de temps de 10 secondes ou moins.

**4.** Procédé selon l'une des revendications 1 à 3, **caractérisé en ce qu'**une surface du liquide plus lourd (26) est voûtée vers l'avant de l'ouverture avant la fermeture de l'ouverture.

**5.** Dispositif destiné à mesurer une tension interfaciale entre un liquide plus lourd (26) et un liquide plus léger (28) selon un procédé de Spinning Drop, comprenant

    • un récipient à échantillon transparent présentant un espace intérieur et une ouverture, et
    • un bouchon (30) permettant de fermer l'ouverture,
    • dans lequel le bouchon (30) présente une admission (32) pour le liquide plus léger (28), laquelle est tournée vers l'espace intérieur du récipient à échantillon lorsque l'ouverture est fermée avec le bouchon (30), l'admission (32) étant disposée de façon symétrique en rotation et sur un axe longitudinal du bouchon (30), **caractérisé en ce que**
    • l'admission (32) est un trou borgne et présente un volume compris entre 0,5 μl et 100 μl.

**6.** Dispositif selon la revendication 5, **caractérisé en ce que** l'admission (32) présente un renfoncement disposé sur un côté frontal (46) du bouchon (30).

**7.** Dispositif selon la revendication 5 ou 6, **caractérisé en ce que** l'admission (32) présente un réservoir (36) et une ouverture (34) reliée au réservoir (36), laquelle est disposée sur un côté frontal (46) du bouchon (30).

**8.** Dispositif selon l'une des revendications 5 à 7, **caractérisé en ce que** le bouchon (30) présente une première section longitudinale (38) dans laquelle un diamètre extérieur du bouchon (30) diminue d'une première valeur correspondant à un diamètre intérieur de l'ouverture du récipient à échantillon à une deuxième valeur inférieure au diamètre intérieur de l'ouverture du récipient à échantillon.

**9.** Dispositif selon la revendication 8, **caractérisé en ce que** la première section longitudinale (38) est conique.

**10.** Dispositif selon l'une des revendications 5 à 9, **caractérisé en ce que** le bouchon (30) présente une deuxième section longitudinale (40) cylindrique dans laquelle un diamètre extérieur du bouchon (30) est dimensionné de telle façon que celui-ci peut être introduit de façon étanche dans l'ouverture du récipient à échantillon.

**11.** Dispositif selon l'une des revendications 5 à 10, **caractérisé en ce que** le bouchon (30) présente une butée en forme de gradin (44), laquelle s'applique sur le bord de l'ouverture du récipient à échantillon lorsque le bouchon (30) est entièrement introduit dans l'ouverture.

**12.** Dispositif selon l'une des revendications 5 à 11, **caractérisé par** un support (52) dans lequel le récipient à échantillon fermé avec le bouchon (30) peut être introduit, un entraînement rotatif (48) permettant de mettre le support (52) en mouvement de rotation, et une commande (50) permettant de commander une vitesse de rotation du mouvement de rotation.

**13.** Dispositif selon la revendication 12, **caractérisé en ce que** la commande (50) est conçue pour diminuer automatiquement la vitesse de rotation dans un laps de temps prédéfini d'une première vitesse de rotation à une deuxième vitesse de rotation prédéfinie et/ou automatiquement dans un laps de temps prédéfini à partir d'une première vitesse de rotation selon une vitesse de rotation prédéfinie.

Fig. 1

Fig. 2

Fig. 3

Fig. 4

Fig. 5

Fig. 6

Fig. 7

Fig. 8

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 201583475 U
- US 4644782 A
- CN 2738240 Y
- US 20050065454 A1

**In der Beschreibung aufgeführte Nicht-Patentliteratur**

- Deformation and bursting of nonspherical polysiloxane microcapsules in a spinning-drop apparatus. **HUSMANN M et al.** Journal of Colloid and Interface Science. Academic Press, 01. Februar 2005, vol. 282, 109-119